# EUROPÄISCHE PATENTSCHRIFT

(11) **EP 1 717 421 B1**
(45) Veröffentlichungstag und Bekanntmachung des Hinweises auf die Patenterteilung: **26.08.2009**
(21) Anmeldenummer: 06005018.4
(22) Anmeldetag: 11.03.2006
(51) Int. Cl.: F01M 11/00, F02B 29/04

(54) **Kurbelgehäuseunterteil**
part of a crankcase
Carter de vilebrequin

(30) Priorität: 25.04.2005 AT 6852005
(43) Veröffentlichungstag der Anmeldung: 02.11.2006
(73) Patentinhaber: MAN Nutzfahrzeuge Österreich AG, 4400 Steyr (AT)
(72) Erfinder: Raab, Gottfried, Dipl.-Ing., A-4320 Perg (AT); Povolny, Heinz, A-4460 Losenstein (AT)

(56) Entgegenhaltungen:
- EP-A- 0 076 474
- EP-A- 0 663 522
- DE-A1- 2 544 813

## Beschreibung

Die Erfindung betrifft eine aufgeladene Brennkraftmaschine mit gattungsgemäßen Merkmalen der im Oberbegriff des Anspruchs 1 angegebenen Art.

Brennkraftmaschinen der gattungsgemäßen Art weisen üblicherweise als Hauptkomponenten einen Zylinderkopf, ein Kurbelgehäuseoberteil und ein Kurbelgehäuseunterteil auf. Im Zylinderkopf, der die Brennräume der Brennkraftmaschine nach oben hin abschließt, befinden sich die Gaswechselventile, die Einspritzdüsen und die jeweiligen Betätigungseinrichtungen. Im Kurbelgehäuseoberteil sind die Zylinder mit den darin angeordneten Kolben und die über Pleuel mit den Kolben verbundene Kurbelwelle angeordnet. Das sich an das Kurbelgehäuseoberteil anschließende Kurbelgehäuseunterteil umschließt den Raum unterhalb der Kurbelwelle und umfasst zumeist eine als Sammelraum für das Motoröl dienende Ölwanne. Aus Gründen der Stabilität kann es vorgesehen sein, das Kurbelgehäuseunterteil zweigeteilt auszuführen, derart, dass zwischen Kurbelgehäuseoberteil und Ölwanne eine Jochplatte oder ein Lagerplatte vorgesehen ist. Während die Jochplatte nur zur Versteifung des Kurbelgehäuseoberteils dient, sind an der auch als "Bedplate" bezeichneten Lagerplatte zusätzlich die Lagerdeckel für die Kurbelwellenlagerung angeformt. Eine Anordnung mit einer Jochplatte ist z. B. aus der EP 0 663 522 A1 bekannt, eine Anordnung mit einer Lagerplatte beschreibt die EP 0 076 474 A1.

Die vorstehend im Gattungsbegriff ebenso wie im Stand der Technik erwähnten Begriffe (Kurbelgehäuse)-oberteil und (Kurbelgehäuse)-unterteil bzw. Angabe wie " unterhalb der Kurbelwelle" usw. sind in diesem Zusammenhang nicht geodätisch zu verstehen, sondern beziehen sich auf die Bewegungsrichtung der Kolben zum oberen bzw. unteren Totpunkt. Unten ist also in der Richtung in der sich der Kolben zum unteren Totpunkt bewegt. Diese Unterscheidung ist deshalb wichtig, weil der Erfindungsgegenstand bei in jedem beliebigen Neigungswinkel eingebauten Brennkraftmaschinen anwendbar ist.

Bei aufgeladenen Brennkraftmaschinen der gattungsgemäßen Art, insbesondere Dieselbrennkraftmaschinen, kann die Aufladung einstufig oder zweistufig sein. Eine Brennkraftmaschine mit zweistufiger Aufladung ist z.B. aus der DE 19961610 A1 bekannt. Zur Verminderung der Ladelufttemperatur weist die dort beschriebene Anordnung einen nach der ersten Verdichterstufe angeordneten Ladeluftkühler als Zwischenkühler auf, dessen Aufgabe darin besteht, das Temperaturniveau der Ladeluft bereits nach der Niederdruckstufe zu senken, um so den Wirkungsgrad der Brennkraftmaschine zu erhöhen und die Abgasemission zu reduzieren. Ein weiterer Ladeluftkühler ist üblicherweise nach dem Hochdruckverdichter angeordnet. Offen bleibt, wie die Ladeluftkühler nach der DE 19961610 ausgebildet sind.

Bei in Fahrzeugen angeordneten Brennkraftmaschinen der eingangs genannten Art kommt zu dem Problem der notwendigen effizienten Kühlung der Ladeluft das Problem, dass der in den verfügbaren Einbauräumen gegebene Platz äußerst gering bemessen ist. Weiter ist es für einen optimalen Durchsatz an Ladeluft zwingend, der Ladeluft strömungstechnisch einen möglichst geringen Widerstand entgegenzusetzen.

Im Hinblick auf eine möglichst Platz sparende Anordnung wird in der DE 2544813 A1 bereits vorgeschlagen, an einer Brennkraftmaschine deren Ladeluftkühler im Bereich der Ölwanne anzuordnen.

Demgegenüber ist es bei einer aufgeladenen Brennkraftmaschine der gattungsgemäßen Art Aufgabe der Erfindung, einen Ladeluftkühler zu schaffen, der einerseits für eine effiziente Kühlung der Ladeluft sorgt und andererseits den beengten Raumverhältnissen an der Brennkraftmaschine für seine Unterbringung Rechnung trägt sowie der durchströmenden Ladeluft einen möglichst geringen Strömungswiderstand entgegensetzt.

Diese Aufgabe wird bei einer Brennkraftmaschine der gattungsgemäßen Art erfindungsgemäß entsprechend dem Kennzeichen des Anspruchs 1 dadurch gelöst, dass der Ladeluftkühler und/oder der Ladeluftzwischenkühler in eine sich am Kurbelgehäuseoberteil anschließende Jochplatte oder Lagerplatte integriert oder an der Jochplatte oder Lagerplatte befestigt ist, wobei die Jochplatte oder Lagerplatte zusammen mit einer sich daran anschließenden Ölwanne das Kurbelgehäuseunterteil bildet.

Die erfindungsgemäße Integration des Ladeluftkühlers und/ oder des Ladeluftzwischenkühlers in das Kurbelgehäuseunterteil nutzt in vorteilhafter Weise einen bei Brennkraftmaschinen der gattungsgemäßen Art vorhandenen, bislang weitgehend ungenutzten Bauraum und minimiert so den Platzbedarf für den Ladeluftkühler und/ oder den Ladeluftzwischenkühler. Dabei wird der Ladeluftkühler und/oder der Ladeluftzwischenkühler baulich mit dem Kurbelgehäuseunterteil vereint, nämlich an einer Jochplatte oder einer Lagerplatte befestigt oder in eine dieser Platten integriert. In vorteilhafter Weise kann dabei der Ladeluftkühler und/oder der Ladeluftzwischenkühler zumindest teilweise einstückig mit der Ölwanne, der Jochplatte oder der Lagerplatte realisiert sein.

Der Ladeluftkühler und/ oder der Ladeluftzwischenkühler ist vorteilhaft in einen die Kühlflüssigkeit führenden ersten Raum und einen gegenüber dem ersten Raum abgeschlossenen die Ladeluft führenden zweiten Raum unterteilt, wobei der erste Raum über einen Kühlflüssigkeitszulauf und einen Kühlflüssigkeitsablauf in einen Kühlflüssigkeitskreislauf eingebunden ist und der zweite Raum über eine Ladeluftzuführleitung mit der Druckseite eines die Ladeluft liefernden Verdichters und über eine Ladeluftabführleitung mit einem Ladeluftsammelrohr oder der Saugseite eines weiteren Verdichters verbunden ist. Die Wärmeaustauschfläche der den ersten Raum von dem zweiten Raum trennenden Wandung ist dabei vorteilhaft möglichst groß.

Weiter ist es vorteilhaft, den Ladeluftkühler und/ oder den Ladeluftzwischenkühler röhrenförmig auszubilden um den der Ladeluft entgegenstehenden Strömungswiderstand möglichst zu minimieren. Dabei kann die Anordnung vorteilhaft in eine Außenröhre und einen vorzugsweise röhrenförmigen Einsatz unterteilt sein, Außenröhre und Einsatz können dabei entweder als Kühlmittelführung oder als Ladeluftführung dienen. Die Außenröhre lässt sich vorteilhaft an der Ölwanne, der Jochplatte oder der Lagerplatte befestigen oder einstückig mit dieser ausführen.

In Verbindung mit der Integration des oder der Ladeluftkühler in das Kurbelgehäuseunterteil bietet es sich bei Brennkraftmaschinen mit Abgasrückführung (AGR) und Kühlung des rückgeführten Abgases an, auch den AGR-Kühler in vorteilhafter Weise in das Kurbelgehäuseunterteil zu integrieren.

Zur Führung der Ladeluft von einer ersten Seite der Brennkraftmaschine auf eine zweite andere Seite ist es weiter möglich, in das Kurbelgehäuseunterteil eine oder mehrere Ladeluftleitungen ohne Kühlfunktion zu integrieren um so das herumführen von Ladeluftleitungen um den Motorblock zu vermeiden. Dies ist deshalb besonders vorteilhaft, weil das Kurbelgehäuseunterteil arm an Funktionsteilen ist, die einer Durchführung der Ladeluftrohre im Wege wären.

Beispiele der erfindungsgemäßen Anordnung sind nachfolgend unter Zuhilfenahme der Zeichnungen näher erläutert, es zeigen:
- Fig.1: Eine Prinzipdarstellung einer Brennkraftmaschine mit 2-stufiger Aufladung
- Fig. 2: Eine Ölwanne mit integriertem Ladeluftzwischenkühler und Ladeluftkühler in perspektivischer Darstellung
- Fig. 3: Die Ölwanne aus Fig. 2 in Draufsicht
- Fig. 4: Eine Schnittdarstellung entlang der Linie A - A' in Fig. 3
- Fig. 5: Eine Schnittdarstellung entlang der Linie B - B' in Fig. 3
- Fig. 6: Eine Schnittdarstellung entlang der Linie C - C' in Fig. 5
- Fig. 7: Eine Jochplatte mit integriertem Ladeluftzwischenkühler in perspektivischer Darstellung
- Fig. 8: Eine Lagerplatte mit integriertem Ladeluftzwischenkühler in Draufsicht
- Fig. 9: Die Lagerplatte aus Fig. 8 in Seitenansicht
- Fig. 10: Eine Schnittdarstellung entlang der Linie E - E' in Fig. 8
- Fig. 11: Eine Jochplatte mit integriertem Ladeluftkühler, Ladeluftzwischenkühler und AGR-Kühler in perspektivischer Darstellung

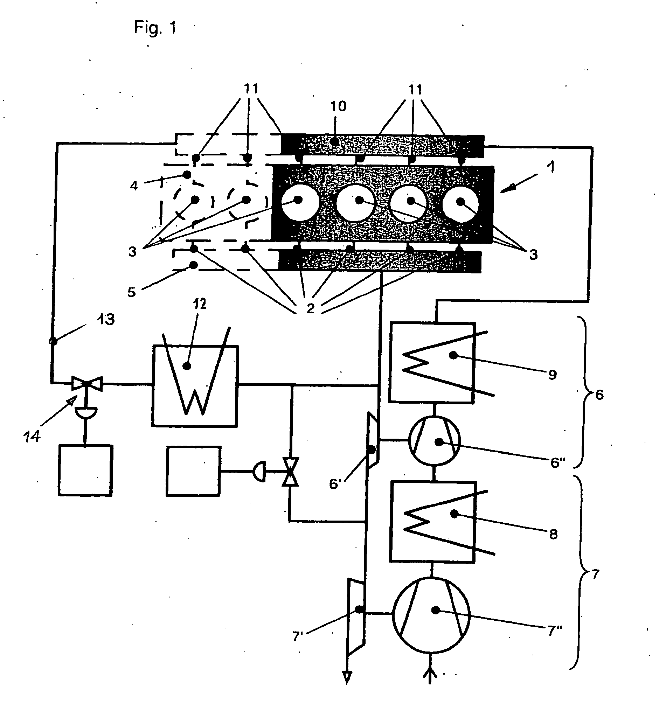

Die in Prinzipdarstellung in Fig. 1 gezeigte Brennkraftmaschine 1 weist einen über Abgaskrümmer 2 an die Brennräume 3 des Motorblocks 4 angeschlossenes Abgassammelrohr 5 auf, das die Verbrennungsgase über das Turbinenrad 6' der Hochdruckverdichterstufe 6 und das Turbinenrad 7' der Niederdruckverdichterstufe 7 führt und über diese den Verdichter 6" der Hochdruckverdichterstufe 6 und den Verdichter 7" der Niederdruckverdichterstufe 7 antreibt. Die Ladeluft wird vom Verdichter 7" der Niederdruckverdichterstufe 7 über einen Luftfilter (nicht dargestellt) angesaugt, verdichtet und gelangt dann über einen Zwischenkühler 8 in den Verdichter 6" der Hochdruckverdichterstufe 6. Dort erfolgt die zweite Verdichtung der Ladeluft, die dann über einen weiteren Ladeluftkühler 9 in das Ansaugrohr 10 der Brennkraftmaschine 1 bzw. über die Ansaugkrümmer 11 in die Brennräume 3 des Motorblocks 4 gelangt. Die Aufgabe des Zwischenkühlers 8 und des Ladeluftkühlers 9 besteht darin, die durch den Verdichtungsvorgang erwärmte Ladeluft zur Optimierung des Wirkungsgrades möglichst wirkungsvoll abzukühlen, ohne den Luftdurchsatz negativ zu beeinflussen.

Weiter ist eine Abgasrückführleitung 13 vorgesehen, die das Abgassammelrohr 5 mit dem Ansaugrohr 10 über einen AGR-Kühler 12 zur Kühlung des rückgeführten Abgases und ein Regelventil 14 zur Regelung der rückgeführten Abgasmenge verbindet. Der AGR-Kühler 12 soll dabei verhindern, dass die Ladeluft durch das rückgeführte Abgas aufgeheizt wird.

Im Folgenden wird anhand einiger Beispiele dargestellt, wie der Ladeluftzwischenkühler und/ oder der Ladeluftkühler und/ oder der AGR-Kühler in das Kurbelgehäuseunterteil integrierbar sind. Es handelt sich dabei lediglich um Prinzipdarstellungen, um die wesentlichen Aspekte der Erfindung zu verdeutlichen.

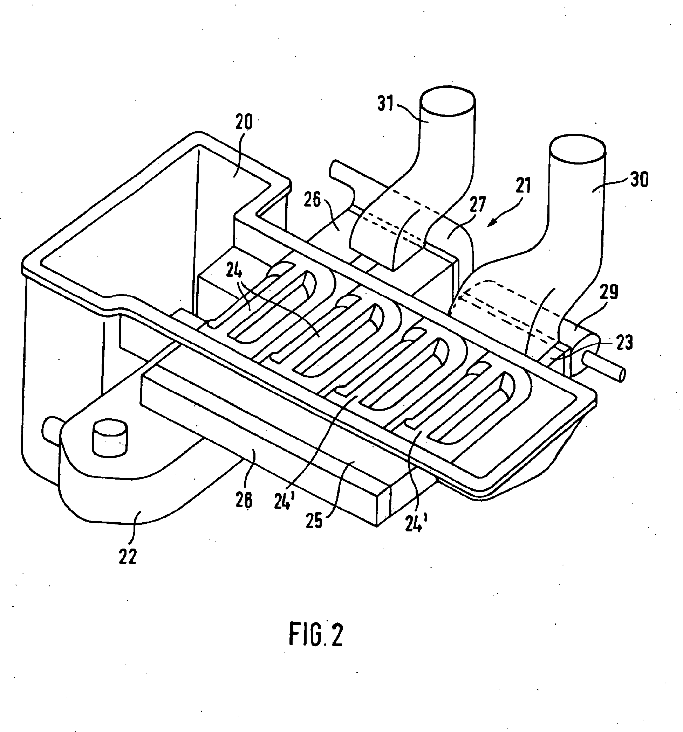

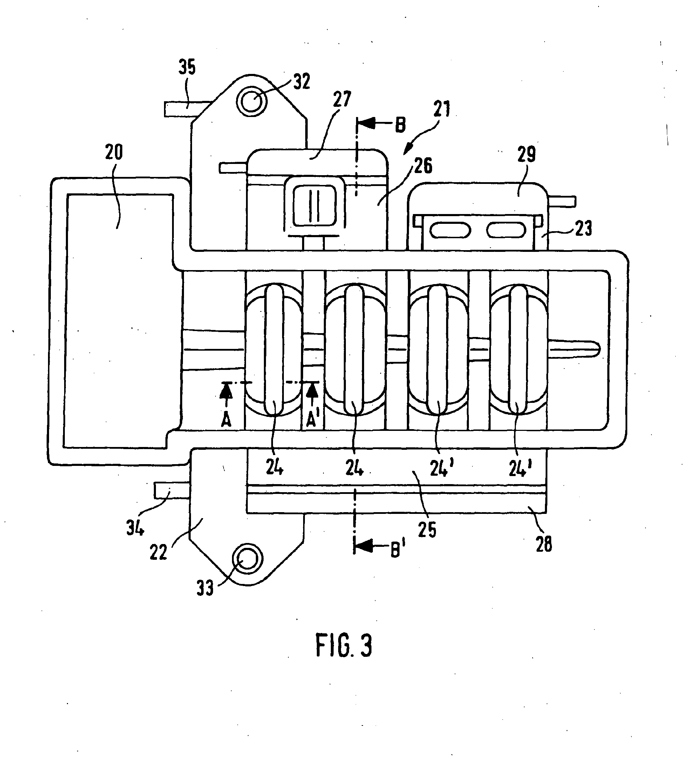

Zunächst ist in den Figuren 2 und 3 eine Anordnung gezeigt, bei der ein Ladeluftzwischenkühler und ein Ladeluftkühler in eine das Kurbelgehäuseunterteil bildende Ölwanne integriert sind. Gleiche Bauteile sind in beiden Figuren mit gleichen Bezugszeichen versehen.

Fig. 2 zeigt in perspektivischer Darstellung und Fig. 3 in Draufsicht eine das Kurbelgehäuseunterteil bildende Ölwanne 20, in die ein Ladeluftzwischenkühler 21 und ein Ladeluftkühler 22 integriert sind. Der Ladeluftzwischenkühler 21 besteht im wesentlichen aus einem an einer ersten Längsseite der Ölwanne 20 angeordneten Ladeluftzuführstutzen 23, von dem aus zwei die Ladeluft führende Ladeluftrohre 24' die Ölwanne zu deren zweiter Längsseite hin durchqueren. An der zweiten Längsseite ist eine Ladeluftsammelkammer 25 angeordnet, die die Ladeluftrohre 24' in einen Zug zusammenfasst und mit Ladeluftrohren 24 verbindet, die von der zweiten Längsseite der Ölwanne 20 ausgehend diese in Richtung auf ihre erste Längsseite durchqueren, wo sie in einen Ladeluftabführstutzen 26 münden.

Im Innern der Ladeluftrohre 24 befinden sich erste Kühleinsätze - in Fig. 2 nicht sichtbar - die eine auf der ersten Seite der Ölwanne 20 an dem Ladeluftabführstutzen 26 angeordnete Kühlmittelzuströmkammer 27 mit einer Kühlmittelsammelkammer 28 auf der gegenüberliegenden zweiten Seite der Ölwanne verbinden. Von dieser Kühlmittelsammelkammer 28 aus führen im Innern der Ladeluftrohre 24' zweite Kühleinsätze - in Fig. 2 ebenfalls nicht sichtbar - zurück zu einer auf der ersten Seite der Ölwanne 20 an dem Ladeluftzuführstutzen 23 angeordneten Kühlmittelabströmkammer 29.

Durch die vorstehend beschriebene Anordnung strömt die von einem Niederdruckverdichter (7" Fig. 1) verdichtete Ladeluft über eine Ladeluftzuführleitung 30 in den Ladeluftzuführstutzen 23 und über diesen und die Ladeluftrohre 24' in die Ladeluftsammelkammer 25. Von dort gelangt die Ladeluft durch die Ladeluftrohre 24, den Ladeluftabführstutzen 26 und eine Ladeluftabführleitung 31 zu einem Hochdruckverdichter (6" Fig. 1). Die Kühlung der Ladeluft erfolgt im Gegenstromprinzip dadurch, dass Kühlmittel aus einem Kühlsystem (nicht dargestellt) über die Kühlmittelzuströmkammer 27 die ersten Kühleinsätze die Kühlmittelsammelkammer 28 und die zweiten Kühlmitteleinsätze zur Kühlmittelabströmkammer 29 fließt und von dort zurück in das Kühlsystem gelangt.

Die vorstehend beschrieben Ladeluftrohre 24, 24' und auch der Ladeluftzuführstutzen 23, die Ladeluftsammelkammer 25 sowie der Ladeluftabführstutzen 26 können einstückig mit der Ölwanne auf gießtechnischem Wege hergestellt sein, es ist aber auch denkbar, dass die Anordnung ganz oder teilweise aus Einzelteilen aufgebaut ist.

Der in den Figuren 2 und 3 gezeigte Ladeluftkühler 22 dient, wie bereits in Verbindung mit Fig. 1 beschrieben, dazu, die von dem Hochdruckverdichter (6" Fig. 1) erneut verdichtete und dabei erwärmte Ladeluft abzukühlen. Der Ladeluftkühler 22 ist unterhalb der Ölwanne 20 in deren flachem Teil an dieser befestigt so angeordnet, dass er von der ersten Längsseite der Ölwanne 20 unter dieser hindurch zu der zweiten Längsseite der Ölwanne 20 führt. Die von dem Hochdruckverdichter (6" Fig.1) gelieferte Ladeluft wird auf der ersten Längsseite der Ölwanne 20 dem Ladeluftkühler 22 über einen Ladeluftanschluss 32 zugeführt und gelangt durch diesen auf die zweite Längsseite der Ölwanne 20, wo an dem Ladeluftkühler 22 eine Ladeluftabführung 33 angeordnet ist, von der aus die Ladeluft über ein Verbindungsrohr zum Ansaugrohr (10 Fig. 1) gelangt. Im Ladeluftkühler 22 ist ein von Kühlmittel durchflossener Wärmetauscher (nicht sichtbar) angeordnet, der über einen Kühlmittelzulauf 34 und einen Kühlmittelablauf 35 mit einem Kühlsystem (nicht dargestellt) verbunden ist.

Die im Vorstehenden in Verbindung mit den Figuren 2 und 3 beschriebene Anordnung lässt sich natürlich in der Weise abwandeln, dass der Zwischenkühler 21 insbesondere bei einer einstufigen Aufladung auch die Funktion eines Ladeluftkühlers übernehmen kann, andererseits kann der Ladeluftkühler 22 auch die Funktion eines Ladeluftzwischenkühlers übernehmen.

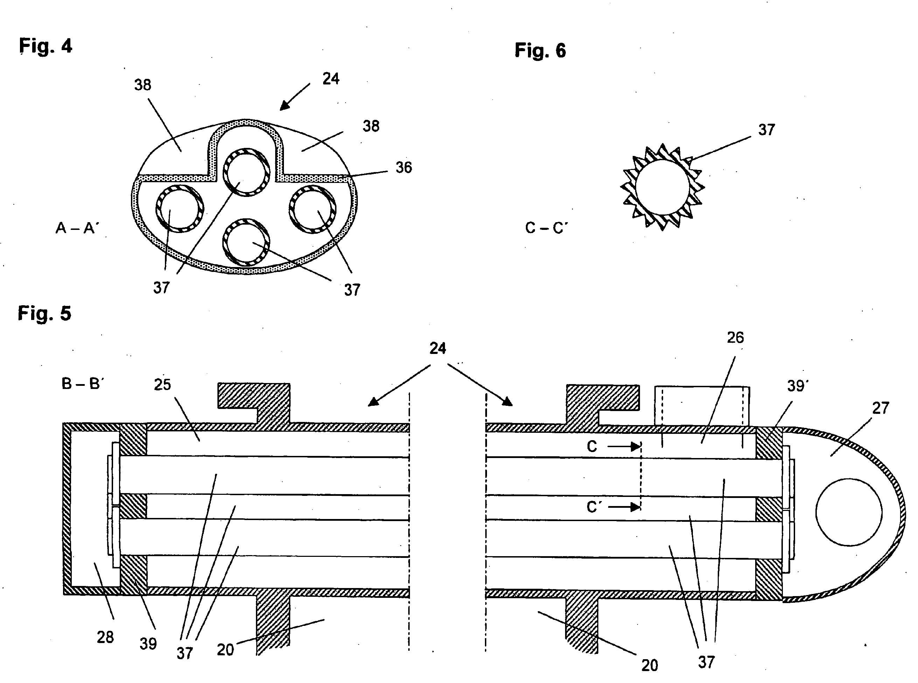

Zur Verdeutlichung des inneren Aufbaus des vorstehend in Verbindung mit den Figuren 2 und 3 beschriebenen Ladeluftzwischenkühlers 21 sind entlang der Linien A - A' und B - B' Schnitte durch die Darstellung in Fig. 3 gelegt. Fig. 4 zeigt eine Schnittdarstellung entlang der Linie A - A' durch das Ladeluftrohr 24. Die Wandung 36 des Ladeluftrohres umschließt einen Kühleinsatz bestehend aus vier Röhren 37, die von Kühlmittel durchflossen sind. Der Raum zwischen den Röhren 37 und der Wandung 36 ist von der Ladeluft durchströmt, so dass sich einerseits eine möglichst große Oberfläche zwischen dem vom Kühlmittel durchflossenen Bereich und dem von der Ladeluft durchflossenen Bereich ergibt und andererseits der Ladeluft kein unnötiges Strömungshindernis entgegensteht. Das Ladeluftrohr 24 ist dabei in den Bereichen 38 so konturiert, dass die Kurbelwelle (nicht dargestellt) bei ihrem Umlauf in diesen Bereichen 38 eintauchen kann, wodurch die Bauhöhe der Anordnung minimiert wird.

In einem Längsschnitt entlang der Linie B - B' zeigt Fig. 5 das Ladeluftrohr 24, das einstückig mit der Ölwanne 20, dem Ladeluftabführstutzen 26 und der Ladeluftsammelkammer 25 ausgeführt ist. Am Ladeluftabführstutzen 26 ist die Kühlmittelzuströmkammer 27 angeordnet, während an der Luftsammelkammer 25 die Kühlmittelsammelkammer 28 angeordnet ist. Das Ladeluftrohr 24, der Ladeluftabführstutzen 26 und die Ladeluftsammelkammer 25 werden von den Röhren 37 in Längsrichtung durchragt, wobei die Röhren 37 über Halteplatten 39, 39' gehalten sind. Die Halteplatten 39, 39' bilden dabei gleichzeitig die Verschlussdeckel für den Ladeluftzuführstutzen 26 zur Kühlmittelzuströmkammer 27 hin und für die Ladeluftsammelkammer 25 zur Kühlmittelsammelkammer 28 hin. Durch den vorstehend beschriebenen Aufbau ergeben sich zwei gegeneinander abgegrenzte Bereiche, einerseits der von der Ladeluft durchströmte Bereich, bestehend aus Ladeluftsammelkammer 25, Ladeluftrohr 24 und Ladeluftabströmstutzen 26 und andererseits der vom Kühlmittel durchströmte Bereich, der die Kühlmittelzuströmkammer 27, die Röhren 37 und die Kühlmittelsammelkammer 28 umfasst.

Zur besseren Wärmeaufnahme durch die vom Kühlmittel durchströmten Röhren 37 können diese wie in Fig. 6 in einer Schnittdarstellung entlang der Linie C - C' gezeigt, profiliert ausgeführt sein, um die mit der Ladeluft in Kontakt stehende Oberfläche der Wandung der Röhre 37 möglichst groß zu gestalten und so den Wärmeübergang zu begünstigen.

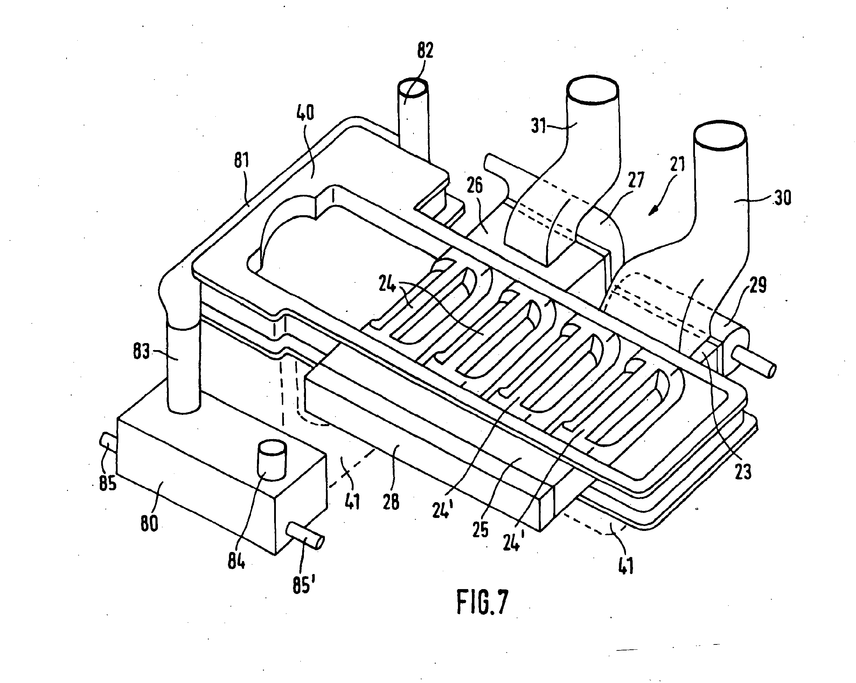

Einen Ladeluftzwischenkühler der in Fig. 2 beschriebenen Art lässt sich auch, wie bereits oben ausgeführt, in eine so genannte Jochplatte integrieren. Fig. 7 zeigt eine derartige Anordnung in perspektivischer Darstellung. Der Aufbau des Ladeluftzwischenkühlers ist identisch zu dem in Verbindung mit Fig. 2 beschriebenen, so dass die entsprechenden Bezugszeichen aus Fig. 2 übernommen wurden und hinsichtlich Aufbau und Funktionsweise auf die Beschreibug zur Fig. 2 verwiesen wird, lediglich die Abweichungen zum Beispiel nach Fig. 2 sind nachfolgend näher ausgeführt. Die in Fig. 7 dargestellte Anordnung zeigt eine Jochplatte 40 die als Leiterrahmen ausgebildet ist, die Funktion der den Leiterrahmen versteifenden Quersprossen übernehmen die mit der Jochplatte 40 einstückig ausgeführten Ladeluftrohre 24, 24', die eine Verbindung von einer ersten Längsseite der Jochplatte 40 zu deren zweiter Längsseite schaffen. An der ersten Längsseite der Jochplatte 40 befinden sich analog zur Darstellung in Fig. 2 der Ladeluftzuführstutzen 23 mit daran angeordneter Ladeluftzuführleitung 30 und Kühlmittelabströmkammer 29 sowie der Ladeluftabführstutzen 26 mit daran angeordneter Ladeluftabführleitung 31 und Kühlmittelzuströmkammer 27. Zur Herstellung der Verbindung zwischen den Ladeluftrohre 24, 24' auf der zweiten Längsseite der Jochplatte 40 sind, ebenfalls analog zum Beispiel nach Fig. 2, die Ladeluftsammelkammer 25 und die sich daran anschließende Kühlmittelsammelkammer 28 angeordnet. Die Kühleinsätze befinden sich in den Ladeluftrohren 24, 24', wie in Verbindung mit den Figuren 2 bis 5 beschrieben. Die Ladeluftführung sowie die Führung des Kühlmittels entspricht der zu dem Beispiel nach Fig. 2 beschriebenen, so dass hierzu auf die entsprechenden Teile der Beschreibung verwiesen wird.

Zur Aufnahme des für die Motorschmierung notwendigen Schmierstoffes schließt sich an die Jochplatte 40 nach unten hin eine Ölwanne 41 (gestrichelt dargestellt) an, die zusammen mit der Jochplatte 40 das Kurbelgehäuseunterteil bildet.

Weiter ist in dem Beispiel nach Fig. 7 ein auf der zweiten Längsseite der Jochplatte 40 seitlich an der Ölwanne 41 angeordneter Ladeluftkühler 80 vorgesehen. Zum Anschluss des Ladeluftkühlers 80 an den auf der ersten Seite der Jochplatte 40 gelegenen Hochdruckverdichter (6" Fig. 1) ist in die Jochplatte 40 ein von deren erster Längsseite auf deren zweite Längsseite führendes weiteres Ladeluftrohr 81 integriert. Der Zustrom der Ladeluft erfolgt vom Hochdruckverdichter über eine Verbindungsleitung 82, das weitere Ladeluftrohr 81 und ein Anschlussrohr 83 zum Ladeluftkühler 80 und von diesem über eine Rohrleitung 84 zum Ansaugrohr (10 Fig.1). Der Ladeluftkühler ist über Kühlmittelanschlüsse 85, 85' in einen Kühlmittelkreislauf (nicht dargestellt) eingebunden.

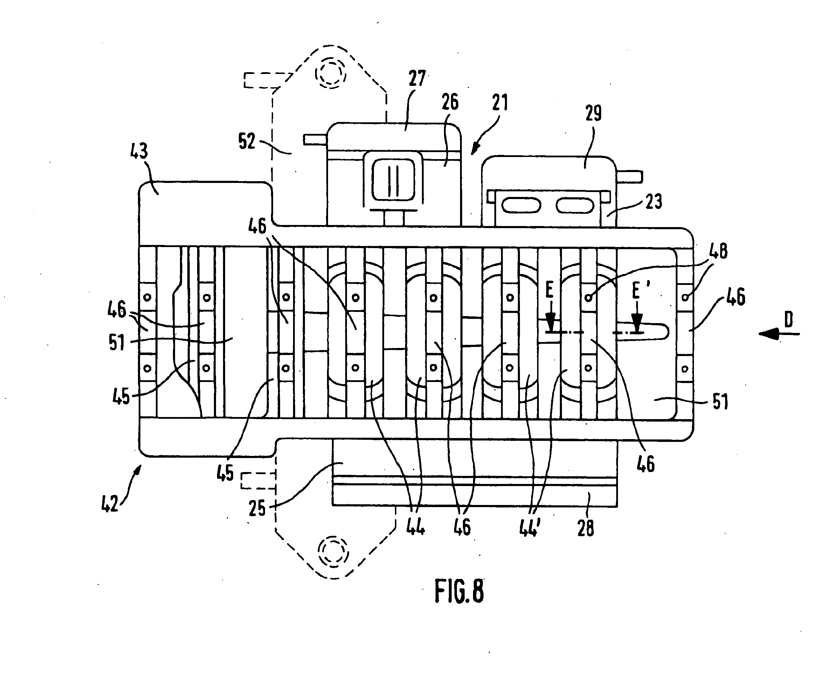

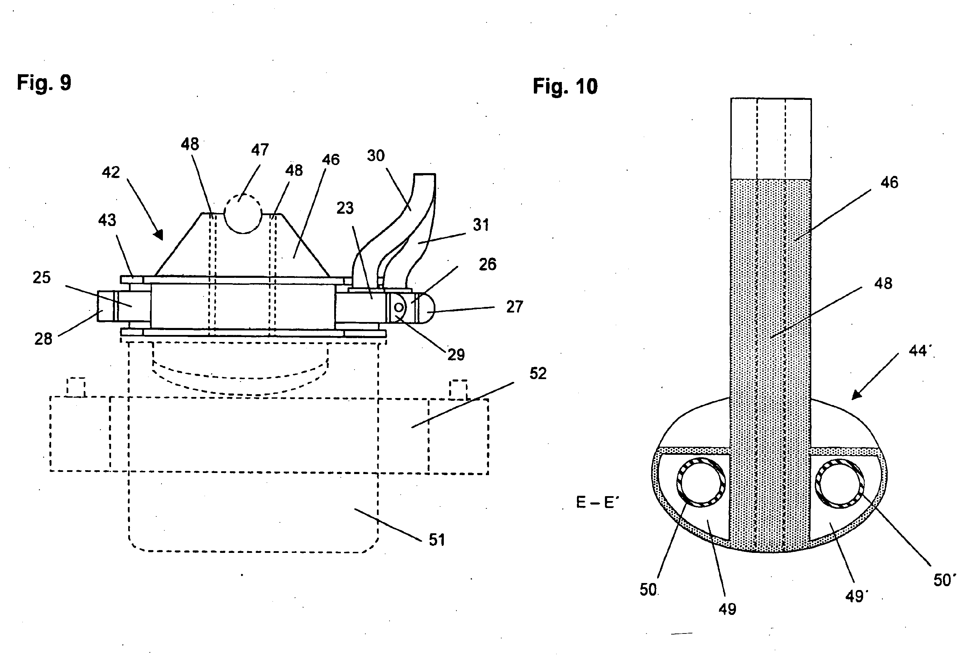

Eine weitere Abwandlung der erfindungsgemäßen Anordnung ist in den Figuren 8 und 9 gezeigt. Die dort dargestellte in der Form eines Leiterrahmens ausgebildete Platte ist als Lagerplatte ausgeführt. Derartigen Lagerplatten oder auch Bedplades bilden, wie bereits eingangs erwähnt, eine Baueinheit die die Lagerdeckel für die Kurbelwellenlager in einem Bauteil zusammenfasst, derart, dass diese in einem Arbeitsgang montiert werden können. Die Fig. 8 zeigt dabei die Anordnung in der Draufsicht, in der Fig. 9 ist die Seitenansicht mit Blickrichtung entsprechend dem mit "D" bezeichneten Pfeil (Fig. 8) dargestellt.

Die Lagerplatte 42 besteht aus einem umlaufenden Rahmen 43, der Querverstrebungen aufweist, die einerseits durch Ladeluftrohre 44, 44' und andererseits durch Lagerdeckelträger 45 gebildet sind. Am umlaufenden Rahmen 43, den Lagerdeckelträgern 45 und den Ladeluftrohren 44 sind, bevorzugt einstückig mit diesen ausgeführt, Lagerdeckel 46 angeordnet, die sich aus der durch den umlaufenden Rahmen 43 gebildeten Ebene heraus in Richtung Kurbelwelle 47 (in Fig. 9 gestrichelt dargestellt) erstrecken. Die Lagerdeckel 46 bilden die jeweils einen Hälften der Kurbelwellenlager, die jeweils anderen Hälften sind am Kurbelwellenoberteil (nicht dargestellt) angeordnet.

Auch in diesem Beispiel kommt ein Ladeluftzwischenkühler 21, der in seinen wesentlichen konstruktiven Merkmalen den im Beispiel nach Fig. 2 beschriebenen Ladeluftzwischenkühler entspricht, zum Einsatz, so dass auch in dem in den Figuren 8 und 9 gezeigten Beispiel, soweit es den Ladeluftzwischenkühler betrifft und konstruktive Übereinstimmung besteht, die Bezugszeichen aus Fig. 2 übernommen sind und hinsichtlich Ausführung und Funktion auf die entsprechenden Beschreibungsteile zu diesem Beispiel verwiesen wird. Die Ladeluftrohre 44, 44' weichen von der Ausführung nach Fig. 2 bzw. den Figuren 4 und 5 in der Weise ab, dass an den Ladeluftrohren 44, 44' die Lagerdeckel 46 angeordnet und in diesen Schraubenlöcher 48 zur Befestigung der Lagerdeckel 46 am Lagerstuhl (nicht dargestellt) vorgesehen sind.

Ein Beispiel für den Aufbau der Ladeluftrohre 44, 44' zeigt Fig. 10. In dieser Schnittdarstellung entlang der Linie E - E' (Fig. 8) ist das Ladeluftrohr 44' quer zu seiner Längsausdehnung geschnitten gezeigt. Ein Lagerdeckel 46 ist einstückig mit dem Ladeluftrohr 44' ausgeführt und teilt den Innenraum des Ladeluftrohres 44' in zwei Züge 49, 49', die jeweils von einem Kühlmittelrohr 50, 50' durchragt werden. Die Züge 49, 49' sind von der Ladeluft durchströmt während die Kühlmittelrohre 50, 50', bevorzugt im Gegenstrom zur Ladeluft, von Kühlmittel durchströmt sind.

Zur Aufnahme des für die Motorschmierung notwendigen Schmierstoffes schließt sich an die Lagerplatte 42 nach unten hin eine Ölwanne 51 an die zusammen mit der Lagerplatte 42 das Kurbelgehäuseunterteil bildet. An der Ölwanne 51 kann, wie in den Figuren 8 und 9 gestrichelt eingezeichnet, ein Ladeluftkühler 52 angeordnet sein.

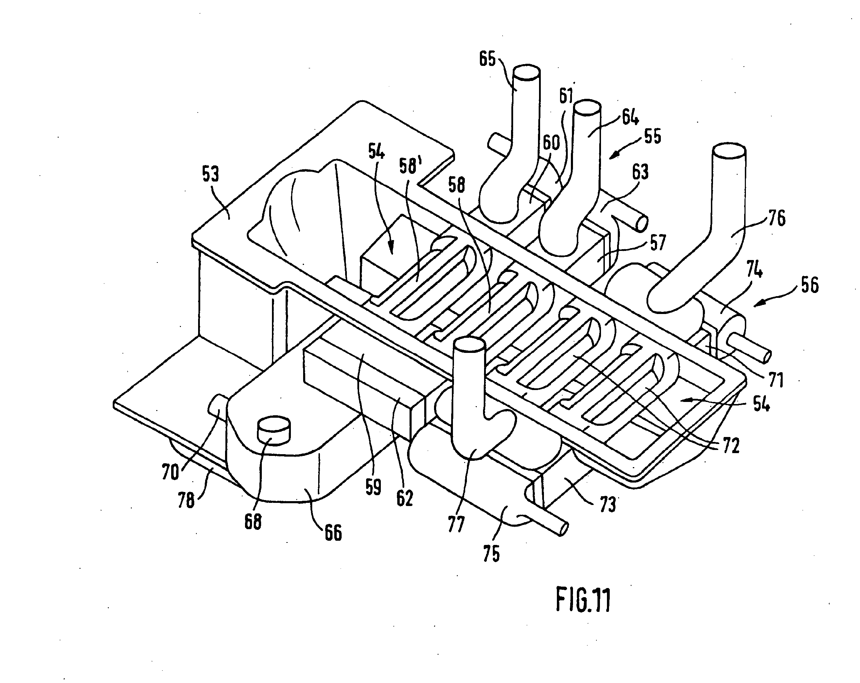

Eine Möglichkeit einen Ladeluftzwischenkühler, einen Ladeluftkühler und einen AGR-Kühler in das Kurbelgehäuseunterteil zu integrieren, zeigt Fig. 11 in perspektivischer Darstellung.

An einer Jochplatte 53, die auch einen Ölsammelraum 54 mit ausbildet, sind ein Ladeluftkühler 66, ein Ladeluftzwischenkühler 55 und ein AGR-Kühler 56 angeordnet. Der Ladeluftzwischenkühler 55 besteht im Wesentlichen aus einem an einer ersten Längsseite der Jochplatte 53 angeordneten Ladeluftzuführstutzen 57, von dem aus ein die Ladeluft führendes Ladeluftrohr 58 zu der zweiten Längsseite der Jochplatte 53 hin führt. An der zweiten Längsseite ist eine Ladeluftüberströmkammer 59 angeordnet, die das Ladeluftrohr 58 mit einem Ladeluftrohr 58' verbindet, das von der zweiten Längsseite der Jochplatte 53 ausgehend zu deren erster Längsseite zurück führt, wo sie in einen Ladeluftabführstutzen 60 mündet.

Im Innern des Ladeluftrohres 58' befindet sich ein erster Kühleinsatz - in Fig. 11 nicht sichtbar - der eine auf der ersten Seite der Jochplatte an dem Ladeluftabführstutzen 60 angeordnete Kühlmittelzuströmkammer 61 mit einer Kühlmittelüberströmkammer 62 auf der gegenüberliegenden zweiten Längsseite der Jochplatte 53 verbindet. Von dieser Kühlmittelüberströmkammer 62 aus führt im Innern des Ladeluftrohres 58 ein zweiter Kühleinsatz - in Fig. 2 ebenfalls nicht sichtbar - zurück zu einer auf der ersten Seite der Jochplatte an dem Ladeluftzuführstutzen 57 angeordneten Kühlmittelabströmkammer 63.

Durch die vorstehend beschriebene Anordnung strömt die von dem Niederdruckverdichter (7" Fig. 1) verdichtete Ladeluft über eine Ladeluftzuführleitung 64 in den Ladeluftzuführstutzen 57 und über diesen und das Ladeluftrohr 58 in die Ladeluftüberströmkammer 59. Von dort gelangt die Ladeluft durch das Ladeluftrohr 58', den Ladeluftabführstutzen 60 und eine Ladeluftabführleitung 65 zum Hochdruckverdichter (6" Fig. 1). Die Kühlung der Ladeluft erfolgt im Gegenstromprinzip dadurch, dass Kühlmittel aus einem Kühlsystem (nicht dargestellt) über die Kühlmittelzuströmkammer 61 den ersten Kühleinsatz die Kühlmittelüberströmkammer 62 und den zweiten Kühlmitteleinsatz zur Kühlmittelabströmkammer 63 fließt und von dort zurück in das Kühlsystem gelangt.

Der in Fig. 11 gezeigte Ladeluftkühler 66 dient, wie bereits in Verbindung mit Fig. 1 beschrieben, dazu, die von dem Hochdruckverdichter (6" Fig. 1) erneut verdichtete und dabei erwärmte Ladeluft abzukühlen. Der Ladeluftkühler 66 ist unterhalb des Ölsammelraums 54 an der Jochplatte 53 angeordnet, derart, dass er von der ersten Längsseite der Jochplatte 53 unter dieser hindurch zu der zweiten Längsseite der Jochplatte 53 führt. Die von dem Hochdruckverdichter (6" Fig.1) gelieferte Ladeluft wird auf der ersten Längsseite der Jochplatte dem Ladeluftkühler 66 über einen Ladeluftanschluss (nicht sichtbar) zugeführt und gelangt durch diesen auf die zweite Längsseite der Ölwanne, wo an dem Ladeluftkühler 66 eine Ladeluftabführung 68 angeordnet ist, von der aus die Ladeluft über ein Verbindungsrohr (nicht dargestellt) zum Ansaugrohr (10 Fig. 1) gelangt. Im Ladeluftkühler 66 ist ein von Kühlmittel durchflossener Wärmetauscher angeordnet, der über einen Kühlmittelzulauf (nicht sichtbar) und einen Kühlmittelablauf 70 mit einem Kühlsystem (nicht dargestellt) verbunden ist.

Neben dem Ladeluftzwischenkühler 55 und dem Ladeluftkühler 66 ist an der Jochplatte 53 ein AGR-Kühler 56 angeordnet, dessen Aufgabe darin besteht, das vom Abgassammelrohr (5 Fig. 1) zum Ansaugrohr (10 Fig. 1) zurückgeführte Abgas so weit abzukühlen, dass dieses die Ladelufttemperatur im Ansaugrohr (10 Fig. 1) nicht nennenswert beeinflusst. Der AGR-Kühler 56 besteht aus einem an der ersten Längsseite der Jochplatte 53 angeordneten AGR-Zuführstutzen 71, von dem aus zwei das rückzuführende Abgas führende Abgasrohre 72 zu der zweiten Längsseite der Jochplatte 53 hin führen, wo sie in eine AGR-Abführstutzen 73 mündet.

Im Innern der Abgasrohre 72 befinden sich analog zu den Darstellungen in den Figuren 4 und 5 aufgebaute Kühleinsätze - in Fig. 11 nicht sichtbar - die eine auf der ersten Seite der Jochplatte 53 an dem AGR-Zuführstutzen 71 angeordnete Abströmkammer 74 mit einer auf der gegenüberliegenden zweiten Längsseite der Jochplatte 53 an dem AGR-Abführstutzen 73 angeordneten Zuströmkammer 75 verbinden.

Durch die vorstehend beschriebene Anordnung strömt von dem Abgassammelrohr (5 Fig. 1) zurückzuführendes Abgas über eine AGR-Zuführleitung 76 in den AGR-Zuführstutzen 71 und über diesen und die Abgasrohre 72 in den AGR-Abführstutzen 73 und eine AGR-Rückführleitung 77 zum Ansaugrohr (10 Fig. 1). Die Kühlung des rückgeführten Abgases erfolgt im Gegenstromprinzip dadurch, dass Kühlmittel aus einem Kühlsystem (nicht dargestellt) über die Zuströmkammer 75 und die Kühleinsätze (nicht sichtbar) zur Abströmkammer 74 fließt und von dort zurück in das Kühlsystem gelangt.

Die vorstehend beschriebene Anordnung ist nach unten hin von einer Ölsammelwanne 78 abgeschlossen und bildet mit dieser zusammen das Kurbelgehäuseunterteil.

Ausgehend von den vorstehend beschriebenen Beispielen lassen sich zahlreiche Abwandlungen denken, die sich aus dem Vorstehenden und dem Fachmann zugänglichem Fachwissen unschwer ableiten lassen ohne den grundlegenden erfinderischen Gedanken zu verlassen, es kommt diesen Ausführungsformen somit nur Beispielcharakter zu. Insbesondere für das Kühlprinzip bieten sich vielfältige Abwandlungen an. So kann insbesondere das Kühlprinzip der in einem Außenrohr geführten Ladeluft bzw. des zurückgeführten Abgases durch einen in dem Außenrohr angeordneten Kühleinsatz umgekehrt werden, dergestalt, dass die Ladeluft bzw. das zurückzuführende Abgas in einem Innenrohr geführt ist und durch eine Mantelkühlung zwischen einem Außenrohr und dem Innenrohr gekühlt wird. Weiter ist das für die vorstehenden Beispiele gewählte Gegenstromprinzip lediglich eine von vielen Möglichkeiten, es können natürlich ebenso Gleichstrom-, Querstrom-, Umkehrstrom- oder Mischvarianten zur Anwendung kommen. Wie die Anordnung in der Praxis ausgeführt wird, ist eine Frage der zu übertragenden Wärmemenge und damit der Auslegung der Anordnung. Diese Auslegung wiederum ist dem Fachmann geläufig.

Um die Kühlwirkung der Anordnung weiter zu verbessern, besteht die Möglichkeit, die Trennwände zwischen dem Kühlmedium und der Ladeluft, bzw. dem rückzuführenden Abgas mit einer Makrostruktur zu versehen, um die zur Kühlung verfügbare Fläche zu vergrößern. Unter einer Makrostruktur wird dabei eine Vielzahl von Erhebungen bzw. Vertiefungen verstanden, die, gleichmäßig oder dem Zufallsprinzip folgend, über die Trennwände verteilt sind.

Gleichfalls kann die Anordnung dahingehend abgewandelt sein, dass die von der Ladeluft durchströmten Röhren in mehrere parallele Kammern aufgeteilt sind. Ebenso besteht für die vom Kühlmedium durchströmten Bereiche die Möglichkeit eine Vielzahl von Zügen vorzusehen.

Besonders günstig lässt sich die erfindungsgemäße Anordnung auf gießtechnischem Wege aus Aluminium oder Gusseisen, herstellen.

Der Umstand, dass in den Beispielen nur Reihenmotoren zur Erläuterung der Erfindung herangezogen sind bedeutet keinerlei Einschränkung, selbstverständlich eignet sich die erfindungsgemäße Anordnung ebenso für Brennkraftmaschinen mit V-förmig angeordneten Zylinderbänken.

## Patentansprüche

1. Aufgeladene Brennkraftmaschine mit einem mittels einer Kühlflüssigkeit gekühlten Ladeluftkühler (9, 22, 52, 66, 80) und/oder einem mittels einer Kühlflüssigkeit gekühlten Ladeluftzwischenkühler (8, 21, 55) und mit einem Kurbelgehäuseoberteil (4) und einem Kurbelgehäuseunterteil, das den Raum unterhalb einer Kurbelwelle umschließt, **dadurch gekennzeichnet, dass** der Ladeluftkühler (9, 22, 52, 66, 80) und/oder der Ladeluftzwischenkühler (8, 21, 55) in eine sich am Kurbelgehäuseoberteil (4) anschließende Jochplatte (40) oder Lagerplatte (42) integriert oder an der Jochplatte (40) oder Lagerplatte (42) befestigt ist, wobei die Jochplatte (40) oder Lagerplatte (42) zusammen mit einer sich daran anschließenden Ölwanne (41, 51) das Kurbelgehäuseunterteil bildet.

2. Brennkraftmaschine nach Anspruch 1, **dadurch gekennzeichnet, dass** der Ladeluftkühler und/oder der Ladeluftzwischenkühler zumindest teilweise einstückig mit der Jochplatte (40) ausgebildet ist.

3. Brennkraftmaschine nach Anspruch 1, **dadurch gekennzeichnet, dass** der Ladeluftkühler und/oder der Ladeluftzwischenkühler zumindest teilweise einstückig mit der Lagerplatte (42) ausgebildet ist.

4. Brennkraftmaschine nach Anspruch 1, **dadurch gekennzeichnet, dass** der Ladeluftkühler (22, 52, 66, 80) und/ oder der Ladeluftzwischenkühler (21, 55) einen die Kühlflüssigkeit führenden ersten Raum und einen gegenüber dem ersten Raum abgeschlossenen die Ladeluft führenden zweiten Raum enthält, wobei der erste Raum über einen Kühlflüssigkeitszulauf und einen Kühlflüssigkeitsablauf in einen Kühlflüssigkeitskreislauf eingebunden ist und der zweite Raum über eine Ladeluftzuführleitung mit der Druckseite eines die Ladeluft liefernden Verdichters und über eine Ladeluftabführleitung mit einem Ladeluftsammelrohr oder der Saugseite eines weiteren Verdichters verbunden ist.

5. Brennkraftmaschine nach Anspruch 4, **dadurch gekennzeichnet, dass** die Wärmeaustauschfläche der den ersten Raum von dem zweiten Raum trennenden Wandung möglichst groß ist.

6. Brennkraftmaschine nach Anspruch 4, **dadurch gekennzeichnet, dass** der Ladeluftkühler (22, 52, 66, 80) und/ oder der Ladeluftzwischenkühler (21, 55) röhrenförmig ausgebildet ist.

7. Brennkraftmaschine nach Anspruch 6, **dadurch gekennzeichnet, dass** der Ladeluftkühler (22, 52, 66, 80) und/ oder der Ladeluftzwischenkühler (21, 55) aus einer von der Ladeluft durchströmten Außenröhre und einem von der Kühlflüssigkeit durchströmten Kühleinsatz gebildet ist.

8. Brennkraftmaschine nach Anspruch 6, **dadurch gekennzeichnet, dass** der Ladeluftkühler und/ oder der Ladeluftzwischenkühler aus einer von der Kühlflüssigkeit durchströmten Außenröhre und einem von der Ladeluft durchströmten Einsatz gebildet ist.

9. Brennkraftmaschine nach einem der Ansprüche 7 oder 8, **dadurch gekennzeichnet, dass** die Außenröhre an der Jochplatte (40) oder an der Lagerplatte (42) befestigt ist.

10. Brennkraftmaschine nach einem der Ansprüche 7 oder 8, **dadurch gekennzeichnet, dass** die Außenröhre mit der Jochplatte (40) oder der Lagerplatte (42) einstückig ausgeführt ist.

11. Brennkraftmaschine nach einem der vorhergehenden Ansprüche, **dadurch gekennzeichnet, dass** sie eine Abgasrückführung (AGR) aufweist und dass zum Kühlen des rückgeführten Abgases ein mittels einer Kühlflüssigkeit gekühlter AGR-Kühler (56) in das Kurbelgehäuseunterteil integriert, ist.

12. Brennkraftmaschine nach einem der vorhergehenden Ansprüche, **dadurch gekennzeichnet, dass** in das Kurbelgehäuseunterteil wenigstens ein Ladeluftrohr (81) integriert ist, derart, dass das Ladeluftrohr (81) von einer ersten Seite des Kurbelgehäuseunterteils zu einer anderen zweiten Seite des Kurbelgehäuseunterteils führt.

## Claims

1. Turbocharged combustion engine with a charge air cooler (9, 22, 52, 66, 80) cooled by means of a coolant and/or with a charge air intercooler (8, 21, 55) cooled by means of a coolant, and with a crankcase upper section (4) and a crankcase lower section that surrounds the area below a crankshaft, **characterised in that** the charge air cooler (9, 22, 52, 66, 80) and/or the charge air intercooler (8, 21, 55) is integrated into a retaining plate (40) or bearing plate (42) attached to the crankcase upper section (4) or is fastened to the retaining plate (40) or bearing plate (42), where the retaining plate (40) or bearing plate (42) forms the crankcase lower section together with an oil pan (41, 51) attached thereto.

2. Combustion engine according to claim 1, **characterised in that** the charge air cooler and/or the charge air intercooler is at least partly executed in one piece with the retaining plate (40).

3. Combustion engine according to claim 1, **characterised in that** the charge air cooler and/or the charge air intercooler is at least partially executed in one piece with the bearing plate (42).

4. Combustion engine according to claim 1, **characterised in that** the charge air cooler (22, 52, 66, 80) and/or the charge air intercooler (21, 55) contains a first area that guides the coolant and a second area that guides the charge air and is closed off from the first area, where the first area is incorporated into a coolant circuit via a coolant feed line and a coolant drain and the second area is connected via a charge air supply line with the pressure side of a compressor that supplies the charge air and connected via a charge air dispersion line with a charge air collector pipe or the suction side of another compressor.

5. Combustion engine according to claim 4, **characterised in that** the heat transfer surface of the partition that separates the first area from the second area is as large as possible.

6. Combustion engine according to claim 4, **characterised in that** the charge air cooler (22, 52, 66, 80) and/or the charge air intercooler (21, 55) is executed in a tubular manner.

7. Combustion engine according to claim 6, **characterised in that** the charge air cooler (22, 52, 66, 80) and/or the charge air intercooler (21, 55) is formed from an outer tube that is passed through by the charge air and from a cooling insert that is passed through by the coolant.

8. Combustion engine according to claim 6, **characterised in that** the charge air cooler and/or the charge air intercooler is formed from an outer tube that is passed through by the coolant and from an insert that is passed through by the charge air.

9. Combustion engine according to one of claims 7 or 8, **characterised in that** the outer tube is fastened on the retaining plate (40) or on the bearing plate (42).

10. Combustion engine according to one of claims 7 or 8, **characterised in that** the outer tube is executed in one piece with the retaining plate (40) or the bearing plate (42).

11. Combustion engine according to one of the preceding claims, **characterised in that** it has exhaust gas recirculation (EGR) and **in that** an EGR cooler (56) cooled by means of a coolant is integrated in the crankcase lower section in order to cool the recirculated exhaust gas.

12. Combustion engine according to one of the preceding claims, **characterised in that** at least one charge air pipe (81) is integrated in the crankcase lower section in such a way that the charge air pipe (81) leads from a first side of the crankcase lower section to another second side of the crankcase lower section.

## Revendications

1. Moteur à combustion interne suralimenté avec un radiateur d'air de suralimentation (9, 22, 52, 66, 80) refroidi au moyen d'un liquide de refroidissement et/ou un d'un radiateur intermédiaire d'air de suralimentation (8, 21, 55) refroidi au moyen d'un liquide de refroidissement et avec une pièce supérieure de carter de vilebrequin (4) et une pièce inférieure de carter de vilebrequin, qui confine l'espace en-dessous d'un vilebrequin, **caractérisé en ce que** le radiateur d'air de suralimentation (9, 22, 52, 66, 80) et/ou le radiateur intermédiaire d'air de suralimentation (8, 21, 55) est/sont intégré(s) dans une plaque de joug (40) ou une plaque de palier (42) reliée à la pièce supérieure de carter de vilebrequin (4) ou bien est/sont fixé(s) sur la plaque de joug (40) ou la plaque de palier (42), auquel cas la plaque de joug (40) ou la plaque de palier (42) forme la pièce inférieure du carter de vilebrequin avec un carter d'huile (41, 51) relié à elle.

2. Moteur à combustion interne selon la revendication 1, **caractérisé en ce que** le radiateur d'air de suralimentation et/ou le radiateur intermédiaire d'air de suralimentation est/sont formé(s) au moins partiellement d'une seule pièce avec la plaque de joug (40).

3. Moteur à combustion interne selon la revendication 1, **caractérisé en ce que** le radiateur d'air de suralimentation et/ou le radiateur intermédiaire d'air de suralimentation est/sont formé(s) au moins partiellement d'une seule pièce avec la plaque de palier (42).

4. Moteur à combustion interne selon la revendication 1, **caractérisé en ce que** le radiateur d'air de suralimentation (22, 52, 66, 80) et/ou le radiateur intermédiaire d'air de suralimentation (21, 55) comporte(nt) un premier espace guidant le liquide de refroidissement et un deuxième espace fermé par rapport au premier espace et guidant l'air de suralimentation, auquel cas le premier espace est intégré dans un circuit de liquide de refroidissement via une amenée et une sortie de liquide de refroidissement, et le deuxième espace est relié au côté refoulement d'un compresseur fournissant l'air de suralimentation via une conduite d'alimentation en air de suralimentation et à un collecteur d'air de suralimentation via une conduite d'évacuation de l'air de suralimentation ou bien au côté aspiration d'un autre compresseur.

5. Moteur à combustion interne selon la revendication 4, **caractérisé en ce que** la surface de refroidissement de la cloison séparant le premier espace du deuxième espace est la plus importante possible.

6. Moteur à combustion interne selon la revendication 4, **caractérisé en ce que** le radiateur d'air de suralimentation (22, 52, 66, 80) et/ou le radiateur intermédiaire d'air de suralimentation (21, 55) est/sont conçu(s) en forme de tube.

7. Moteur à combustion interne selon la revendication 6, **caractérisé en ce que** le radiateur d'air de suralimentation (22, 52, 66, 80) et/ou le radiateur intermédiaire d'air de suralimentation (21, 55) est/sont formé(s) d'un tuyau extérieur traversé par l'air de suralimentation et d'un élément de refroidissement traversé par le liquide de refroidissement.

8. Moteur à combustion interne selon la revendication 6, **caractérisé en ce que** le radiateur d'air de suralimentation et/ou le radiateur intermédiaire d'air de suralimentation est/sont formé(s) d'un tuyau extérieur traversé par le liquide de refroidissement et d'un élément de refroidissement traversé par l'air de suralimentation.

9. Moteur à combustion interne selon l'une des revendications 7 ou 8, **caractérisé en ce que** le tuyau extérieur est fixé à la plaque de joug (40) ou à la plaque de palier (42).

10. Moteur à combustion interne selon l'une des revendications 7 ou 8, **caractérisé en ce que** le tuyau extérieur est formé d'une seule pièce avec la plaque de joug (40) ou la plaque de palier (42).

11. Moteur à combustion interne selon l'une des revendications mentionnées précédemment, **caractérisé en ce qu'**il présente une reconduction des gaz d'échappement (EGR) et **en ce que**, pour refroidir les gaz d'échappement reconduits, un radiateur EGR (56) refroidi à l'aide d'un liquide de refroidissement est intégré dans la pièce inférieure du carter de vilebrequin.

12. Moteur à combustion interne selon l'une des revendications mentionnées précédemment, **caractérisé en ce qu'**au moins un tuyau d'air de suralimentation (81) est intégré à la pièce inférieure de carter de vilebrequin de telle manière que le tuyau d'air de suralimentation (81) conduise l'air de suralimentation d'un premier côté de la pièce inférieure du carter de vilebrequin à un autre deuxième côté de la pièce inférieure du carter de vilebrequin.
